# EUROPÄISCHE PATENTANMELDUNG

(11) **EP 1 618 775 A1**
(43) Veröffentlichungstag der Anmeldung: **25.01.2006**
(21) Anmeldenummer: 05015865.8
(22) Anmeldetag: 21.07.2005
(51) Int. Cl.: A01C 17/00

(54) **Schleuderdüngerstreuer**

(30) Priorität: 21.07.2004 DE 102004035225; 29.07.2004 DE 102004039193
(71) Anmelder: Amazonen-Werke H. Dreyer GmbH & Co. KG, 49205 Hasbergen (DE)
(72) Erfinder: Dreyer, Heinz Dr. Dipl.-Ing. Univ., 49205 Hasbergen (DE); Dreyer, Justus Dr. Dipl.-Ing., 49078 Osnabrück (DE); Lührmann, Johannes, 49134 Wallenhorst (DE)

(57) **Zusammenfassung**

Schleuderdüngerstreuer mit zumindest zwei rotierend angetriebenen Schleuderscheiben, auf denen Wurfschaufeln angeordnet sind, mit denen sowohl die Normaldüngung mit flach abfallenden Streuflanken als auch das Grenzstreuen mit steil abfallenden Streuflanken durchführbar ist, wobei bei dem Übergang von Normal- auf Grenzstreuen die Wurfschaufeln umstellbar sind, wobei die Rückwände zumindest einiger der Wurfschaufeln zwei einander anschließende Abschnitte aufweisen, wobei der eine Abschnitt gegenüber den anderen Abschnitt verstellbar angeordnet ist, so dass der äußere der Abschnitte nicht mehr an der Schleuderwirkung teilnimmt. Eine einfache Verstellmöglichkeit der wirksamen Längen der Wurfschaufeln für verschiedene Arbeitsweise vorzuschlagen, so dass das jeweils gewünschte Streubild für den jeweiligen Einsatzfall in einfacher Weise zu erzeugen ist, dass hinter der vorderen Rückwand der Wurfschaufel eine weitere zumindest eine aufrechte Rückwand, die eine kürzere wirksame Länge als die vor ihr angeordnete Rückwand aufweist angeordnet ist, dass dieser weiteren Rückwand der wurfschaufel durch die durch das Verstellen des inneren Abschnittes der vorderen Rückwand der Wurfschaufel geschaffenen Durchtrittsöffnung das zu verteilende Material zuführbar ist.

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der DE-OS 40 03 945 A1 beschrieben. Auf den Schleuderscheiben sind entsprechend der Darstellung in der Fig. 2 zwei Wurfschaufeln gleicher Länge angeordnet. Die Rückwände der wurfschaufeln können verschwenkt werden, so dass ein Teil der Rückwände der Wurfschaufeln nicht mehr an der Schleuderwirkung teilnimmt. Hierdurch lässt sich der Schleuderdüngerstreuer von Normalstreuen auf Grenzstreuen umstellen. Beim Normalstreuen wird der Dünger mit relativ großen Wurfweiten abgeschleudert, so dass flach abfallende Streuflanken eines Streubildes entstehen, die dann bei hin- und herfahren miteinander überlappt werden. Beim Grenzstreuen entsteht nach Verschwenken der Rückwände der Wurfschaufeln eine zur Feldrändgrenze steil abfallende Streuflanke. Hierdurch wird dann der Dünger mit etwa gleichbleibender Streustärke bis an den Feldrand herangeworfen.

Der Erfindung liegt die Aufgabe zugrunde, eine einfache Verstellmöglichkeit der wirksamen Längen der Wurfschaufeln für verschiedene Arbeitsweise vorzuschlagen, so dass das jeweils gewünschte Streubild für den jeweiligen Einsatzfall in einfacher Weise zu erzeugen ist.

Diese Aufgabe wird erfindungsgemäß durch die kennzeichnenden Merkmale des Patentanspruches 1 erreicht. Infolge dieser Maßnahmen wird durch das unwirksam machen des inneren Abschnittes der Wurfschaufeln eine Durchtrittsöffnung zu der hinter der vorderen Wurfschaufel angeordneten und als Rand- und/oder Grenzstreuschaufel wirkeriden Wurfschaufel geschaffen. Hierdurch lässt sich eine Änderung der Streubildcharakteristik entsprechend den vorliegenden Einsatzverhältnissen in gewünschter Weise erreichen.

Um zu gewährleisten, dass der durch das Verstellen des inneren Abschnittes der vorderen Wurfschaufel geschaffenen Durchtrittsöffnung das zu verteilende Material der dahinter angeordneten Wurfschaufeln in vorgesehener Weise zugeführt wird, ist vorgesehen, dass das innere Ende der Rückwand der weiteren Wurfschaufeln derart zu der vorderen Wurfschaufeln angeordnet ist, dass den weiteren Wurfschaufeln die durch das Verstellen des inneren Abschnittes den vorderen Wurfschaufeln geschaffenen Durchtrittsöffnungen Material zugeführt wird.

Um die Zuleitung dieses Materials durch die Durchtrittsöffnung entsprechend der hinteren Wurfschaufel verlustfrei zuzuleiten, ist vorgesehen, dass das innere Ende der Rückwand der weiteren Wurfschaufel an die innerenhinteren Bereiche der vorderen Wurfschaufel anschließt.

Um Spritzverluste bei der Durchleitung durch die Durchtrittsöffnung zu der hinteren Wurfschaufeln zu vermeiden, ist vorgesehen, dass der Zwischenbereich oberhalb der Rückwände der vorderen und hinteren Wurfschaufeln zumindest im inneren Bereich mit einem Abdeckelement abgedeckt ist.

Um eine möglichst gleichmäßige Düngerverteilung über die gewünschten Arbeitsbreiten erreichen zu können, ist vorgesehen, dass auf jeder Schleuderscheibe zumindest eine Gruppe Wurfschaufeln mit kürzerer und eine Gruppe Wurfschaufeln mit längerer wirksamer Länge angeordnet sind, wobei jede Gruppe zumindest zwei Wurfschaufeln aufweist.

Eine vorteilhafte Verstellung der Rückwände wird dadurch erreicht, dass die Mittel zum Verstellen des jeweiligen inneren Teils der Rückwände der Wurfschaufeln als an den Schleuderscheiben angeordnete motorische Einstellmittel ausgebildet sind. Infolge dieser Maßnahmen kann auch mittels einer elektronischen Steuerungs- und Regelungseinrichtung (Bordcomputer) eine Verstellung der Rückwände in automatischer Weise erfolgen.

Es ist vorgesehen, dass der innere Abschnitt in einer durch die Rückwand verlaufenden Ebene verstellbar angeordnet ist. Hierbei wird der innere Abschnitt nach oben oder nach unten verschoben.

Um in die inneren Abschnitte in einfacher Weise verstellen zu können, ist vorgesehen das der innere Abschnitt an einem auf der Oberseite oder Unterseite der Wurfschaufel sich befindenden Verstellelement befestigt ist und mit diesem gegenüber der Schleuderscheibe und den übrigen Teilen der Wurfschaufel anhebbar und absenkbar ist.

Um sämtliche.inneren Abschnitte in gleicher Weise verstellen zu können ist vorgesehen, dass das Verstellelement als umlaufender Ring ausgebildet ist, dass an diesem Ring sämtliche verstellbaren inneren Abschnitte der Wurfschaufel angeordnet sind.

Um die Verstelleinrichtung in einfacher Weise an dem Ring angreifen lassen zu können, ist vorgesehen, dass der Ring auf seinem inneren und/oder äußeren Umfang die an ihm befestigten inneren und verstellbaren Abschnitte überragt. Die Verstelleinrichtung kann auch als gabelähnliche Verstelleinrichtung mit Fernbedienungseinrichtung ausgebildet sein.

Somit ist es möglich, dass an dem Verstellelement zumindest eine Verstelleinrichtung, vorzugsweise eine motorische und/oder fernbedienbare Vorrichtung angreift.

Verschiedene Einsatzverfahren des Schleuderdüngerstreuers lassen sich dadurch verwirklichen, dass zur Verringerung der Arbeitsbreite des Schleuderdüngerstreuers nur die wirksame Länge der längeren Wurfschaufel durch Verstellen der inneren Rückwände der längeren Wurfschaufeln verkürzt wird, und dass zum Einstellen des Streuers auf dass Grenzstreuen die wirksame Länge aller Wurfschaufeln durch verstellen der inneren Rückwände aller Wurfschaufeln verkürzt wird.

In manchen Fällen kann es zur Erreichung einer gleichmäßigen Verteilung des Materiales über die Bodenoberfläche erforderlichsein, da Mittel zum Verstellen des Aufgabebereichtes und/oder Punktes des auszubringenden Materials auf die Schleuderscheibe und/oder Wurfschaufeln vorgesehen sind. Durch diese Maßnahmen lässt sich das veränderte Abschleudern der Materialien an die erforderlichen Einsatzverhältnisse anpassen.

Um eine automatische Anpassung der Streugutverteilung an die unterschiedlichen Ausbringeigenschaften anpassen zu können, ist vorgesehen, das Mittel zum Verstellen des Aufgabebereiches und/oder Punktes mit den Mitteln zum Verstellen der inneren Abschnitte der Wurfschaufeln über eine elektronische Einstelleinrichtung miteinander verknüpft sind. Hierdurch erfolgt dann eine automatische Abgleichung der einzelnen Einstellparameter aufeinander um die gewünschte gleichmäßige Streugutverteilung zu erreichen. Des Weiteren kann es sinnvoll sein, dass die Wurfschaufeln, und zwar die vorderen und hinteren Rückwände entsprechend im Winkel auf der Schleuderscheibe einstellbar sind.

Hierbei kann es sinnvoll sein, die einzelnen Maßnahmen hintereinander zu kombinieren.

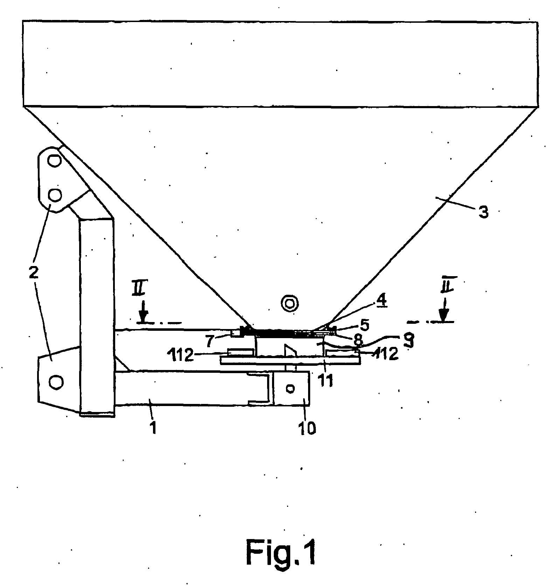

Weitere Einzelheiten der Erfindung sind den übrigen Unteransprüchen, der Beispielsbeschreibung und den Zeichnungen zu entnehmen. Hierbei zeigen
- Fig. 1: Den Schleuderstreuer in Seitenansicht und in Prinzipdarstellung,
- Fig. 2: die Ansicht der Schleuderscheiben und der Dosierung in der Ansicht II-II,
- Fig. 3: die Schleuderscheibe mit der Verstelleinrichtung in der Ansicht III-III,
- Fig. 4: die Schleuderscheibe mit der Verstelleinrichtung Iv-IV,
- Fig. 5: die Schleuderscheibe mit der Verstelleinrichtung in Grenzstreustellung, in der Ansicht entsprechend Fig. 2,
- Fig. 6: die Schleuderscheibe mit der verstelleinrichtung in Grenzstreustellung in der Darstellungsweise nach Fig. 3 und
- Fig. 7: die Schleuderscheibe mit der Verstelleinrichtung in Grenzstreustellung in der Darstellungsweise nach Fig. 4.

Der Schleuderdüngerstreuer weist den Rahmen 1 auf, der an seiner Vorderseite Dreipunktkupplungselemente 2 und zwar zum Anbau an den Dreipunktkraftheber des Schleppers aufweist. An dem Rahmen 1 des Schleuderdüngerstreuer ist der Vorratsbehälter 3 angeordnet, dessen unteres trichterförmiges Ende mittels eines Dosierorgans 4, welches zumindest eine in eine Bodenplatte 5 angeordnete Auslauföffnung 6 und einen zugeordneten mittels Einstellelement 7 einstellbaren Schieber 8 aufweist, abgeschlossen ist. Unterhalb des Dosierorgans 4 ist ein Zuleitungsraum 9 für das von dem Dosierorgan 4 dosierte Material zwecks Zuleitung zu der von einer Antriebseinrichtung 10 rotierend angetriebenen Schleuderscheibe 11 angeordnet. Auf der Schleuderscheibe 11 sind Wurfschaufeln 12 unterschiedlicher Länge angeordnet, deren inneren Enden unmittelbar an der Außenwand des Zuleitungsraumes 9 beginnen. Die Wurfschaufeln 12 weisen unterschiedliche wirksame Längen auf, um unterschiedliche Streubereiche des Streudeckers abzudecken, damit eine gleichmäßige Düngerverteilung über die gewünschte Arbeitsbreite erreicht wird.

Auf der Schleuderscheibe 11 sind insgesamt 4 längere und 4 kürzere Wurfschaufeln 112 angeordnet. Wegen der Übersichtlichkeit ist jedoch nur eine kürzere Wurfschaufel 112 auf der Schleuderscheibe 11 dargestellt. Die übrigen Wurfschaufeln 112 sind in gleicher Weise und in entsprechender Ausgestaltung an den übrigen dafür vorgesehenen Aufnahmevorrichtungen 13 anzuordnen. Hierbei sind in Drehrichtung 14 der Schleuderscheibe 11 gesehen, jeweils abwechselnd eine kurze und eine lange Schaufel 112 aufeinanderfolgend angeordnet. Die Wurfschaufel 112 weist die vordere 115 und hintere Rückwand 116 auf. Die hintere Rückwand 116 ist in Drehrichtung 14 beabstandet hinter der vorderen Rückwand 115 angeordnet. Die vordere Rückwand 115 beschleunigt den Dünger zum Normalstreuen während, wie in noch nachfolgend beschrieben, der Dünger von der hinteren Rückwand 116 der Wurfschaufel 112 für das Grenzstreuen abgeworfen wird. Die vordere Rückwand 115 besteht aus einem inneren 115' und einem äußeren Abschnitt 115".

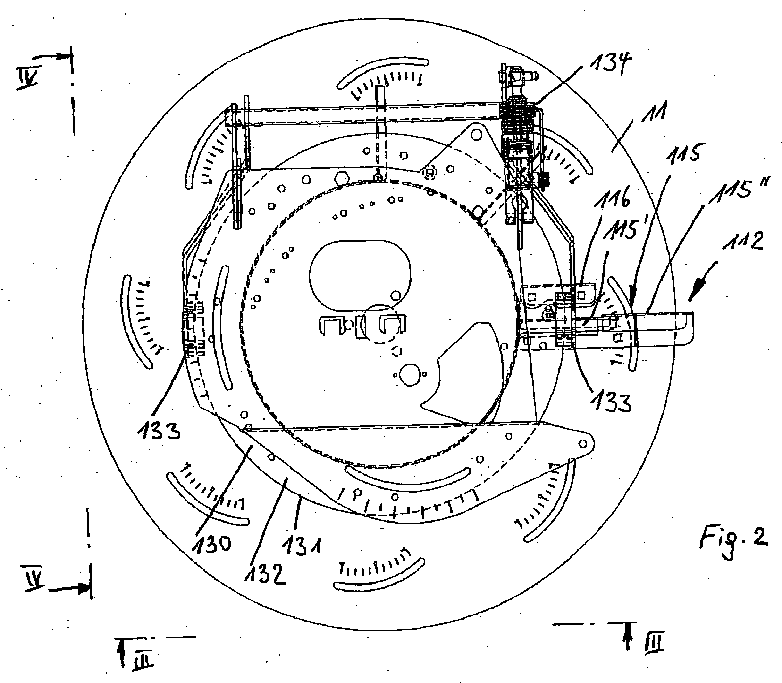

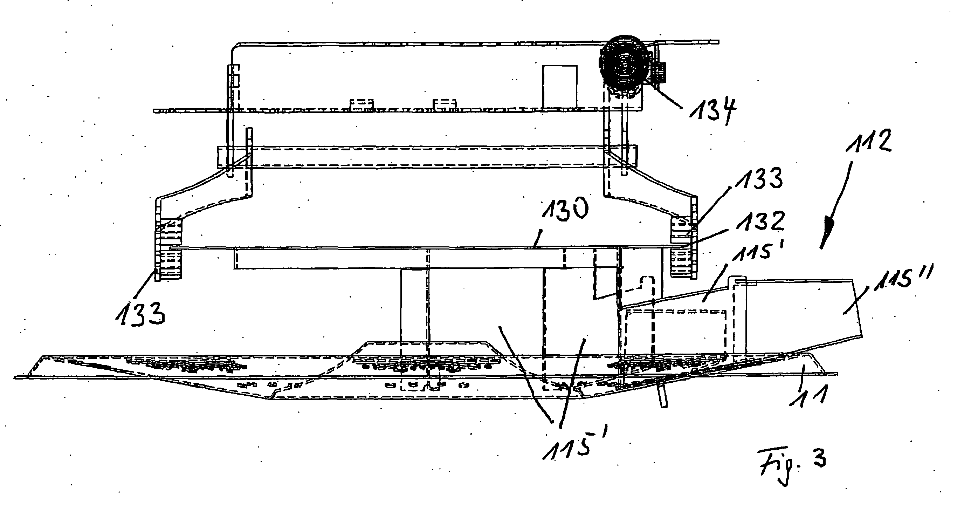

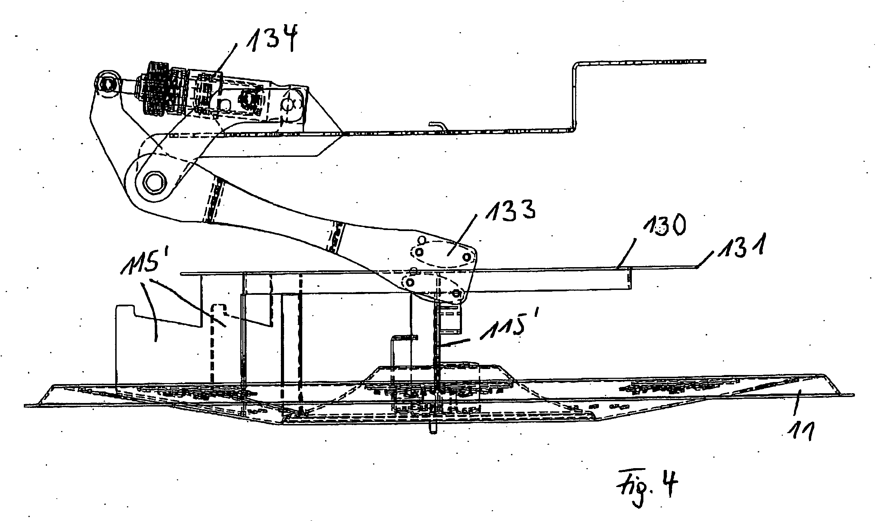

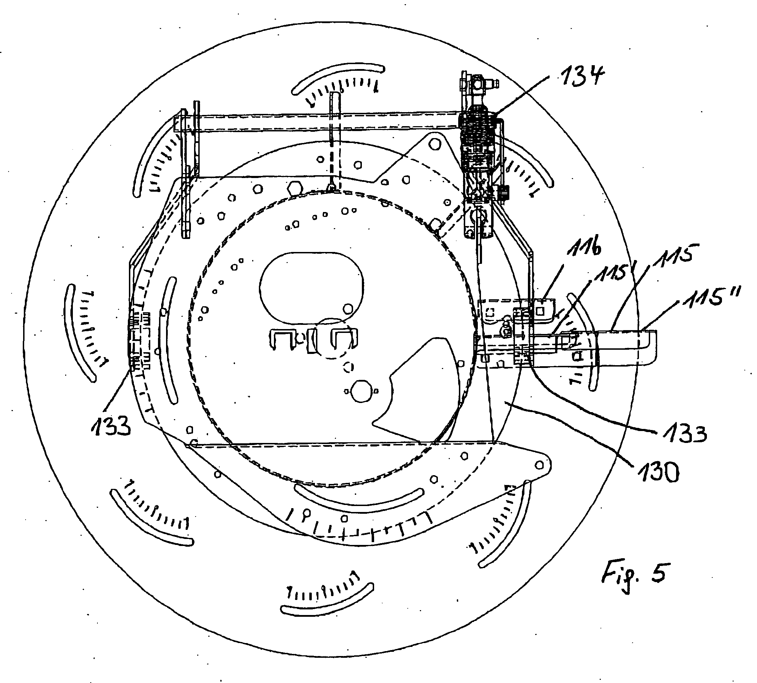

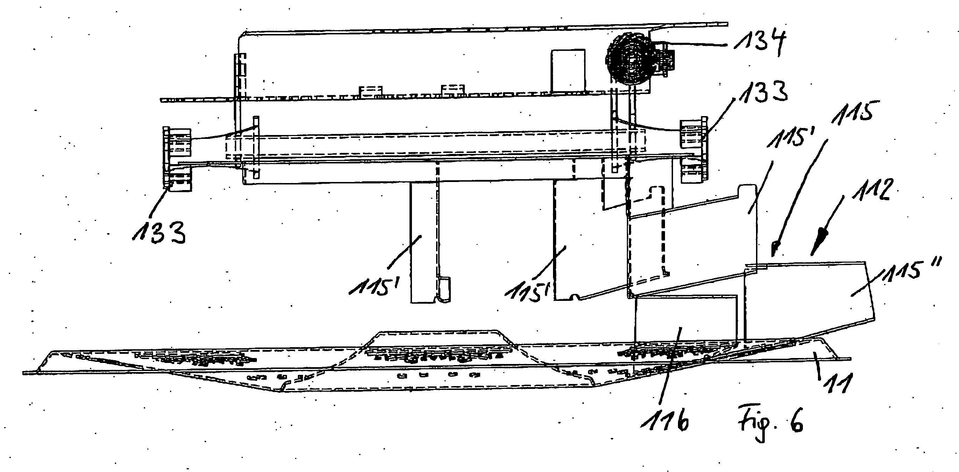

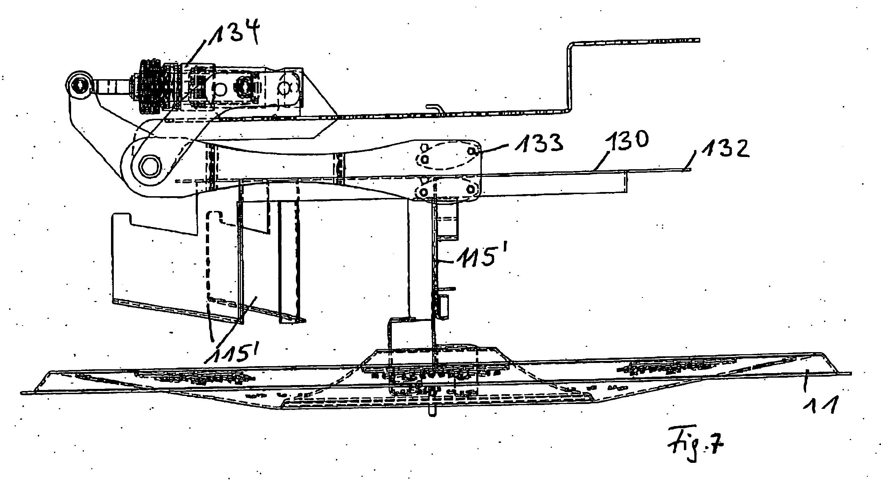

Des weiteren ist der Übersichtlichkeit halber nur eine Wurfschaufel 112 sowie drei verschiebbare innere Abschnitte 115' der vorderen Rückwand 115 dargestellt. Auf der Schleuderscheibe 11 sind insgesamt acht Wurfschaufeln 112 angeordnet, wobei vier kürzere und vier längere Wurfschaufeln 112 vorgesehen sind. Jede Wurfschaufel 112 weist eine vordere Rückwand 115 und eine hintere Rückwand 116 auf. An der hinteren Rückwand 116 kann eine nicht dargestellte verschiebbare Rückwandverlängerung angeordnet sein, um die wirksame Länge der hinteren Rückwand einstellen zu können. Die vordere Rückwand 115 weist einen inneren Abschnitt 115' und einen äußeren Abschnitt 115*"* auf. Der innere Abschnitt 115 ist zu der Wurfschaufel 112 in senkrechter Ebene verstellbar geführt. Hierzu sind die inneren Abschnitte 115' der vorderen Rückwände 115 an ihrer Oberseite an einem Verstellring 130 angeordnet und hiermit gegenüber der Schleuderscheibe 11 und den übrigen Teilen 115", 116 der Wurfschaufel 112 anhebbar und absenkbar. Das als umlaufender Ring 130 ausgebildete Verstellelement überragt mit seinem äußeren Umfang 131 die an ihm befestigten inneren und verstellbaren Abschnitte 115 An diesem Ring 130 sind sämtliche verstellbaren innere Abschnitte 115 der Wurfschaufeln 112 gemäß dem Ausführungsbeispiel nach den Fig. 2-4 angeordnet. An dem die äußeren Abschnitte 115' nach außen überragenden Rand 132 des Rings 130 greift eine gabelähnliche Verstelleinrichtung 133 zum Verstellen der inneren Abschnitte 115*'* der Wurfschaufeln 112 an. Diese Verstelleinrichtung 133 ist mittels einer motorischen Verstelleinrichtung 134 verstellbar, so dass der Ring 130 mit der an ihm angeordneten inneren Abschnitte 115' in die Fig. 2-4 dargestellte Position abgesenkt und gemäß der in den Fig. 5-7 dargestellten Stellung angehoben ist. In der abgesenkten Stellung wird das von den Dosierorganen 4 den Schleuderscheiben 11 zugeleitete Material von der vorderen Rückwand 115 abgeschleudert, während in der in den Fig. 5-7 dargestellten position durch das Anheben der inneren Abschnitte 115 das Material durch die so geschaffenen Durchtrittsöffnungen 135 der hinteren Rückwand 116 zugeführt wird, und somit von der hinteren Rückwand 116 der Wurfschaufel 112 abgeschleudert wird. Der äußere Abschnitt 115' der vorderen Rückwand 115 nimmt nicht mehr an der Schleuderwirkung teil. Der innere Abschnitt 115' der vorderen Rückwand 115 ist also so verstellbar, dass durch Verstellen des inneren Abschnittes 115' der vorderen Rückwand 115 das Material wahlweise der vorderen Rückwand 115 oder der hinteren Rückwand 116 der Wurfschaufel 112 zugeführt wird. Dies bedeutet also, dass nach der jeweiligen Stellung die äußere Rückwand 115'der vorderen Rückwand oder die hintere Rückwand 116 der Wurfschaufel 112 nicht an der Schleuderwirkung teilnimmt.

In nicht dargestellter Weise können die inneren Abschnitte der kürzeren Wurfschaufeln an einer anderen Verstelleinrichtung als die Abschnitte der längeren Wurfschaufeln angeordnet werden, so dass verschiedene Arbeitsbreiten und Grenz- und Randstreuabstände und somit verschiedene Streubilder einstellbar sind, in welcher das Material über der zu bestreuenden Fläche abgeschleudert wird. Hierdurch ist es möglich, dass in einer ersten Einstellungen die inneren Rückwände 115' sämtlicher Wurfschaufeln 112 so eingestellt werden, dass die Rückwände 115 in ihrer gesamten wirksamen Länge an der Schleuderwirkung bei Normalstreuen teilnehmen. In einer zweiten Einstellung können zur Verringerung der Arbeitsbreite des Schleuderdüngerstreuers die Rückwände 115 der längeren Wurfschaufel 112 durch Anheben der inneren Abschnitte 115' der Rückwände 115 in ihrer wirksamen Länge verkürzt werden. In einer dritten Einstellung zum Grenzstreuen und Randstreuen können dann die Abschnitte 115 der Rückwände aller Wurfschaufeln 112 durch Anheben des inneren Abschnittes 115' der Rückwände 115 in ihrer wirksamen Länge verkürzt werden. Außerdem kann auch weiterhin vorgesehen werden, dass in einer vierten Einstellung die Wurfschaufeln 112 für das Grenzstreuen durch entsprechendes Verstellen der inneren Abschnitte 115' der Rückwände 115 der Wurfschaufeln 112 einstellbar sind.

Die hintere Rückwand 116 der Wurfschaufeln 112 sind derart auf der Schleuderscheibe 11 zu den vorderen Rückwänden 115 der Wurfschaufeln 112 angeordnet und ausgestaltet, das der von der hinteren Rückwand 116 abgeworfenen Düngerstrom nicht von einer vorderen Rückwand 115 erfasst wird. Dies ist wichtig, damit in gewünschter Weise ein Grenzstreubild mit steiler Streuflanke entsteht. Die hinteren Rückwände 116 sind ebenfalls, wie die vorderen Rückwände 115 in Scheibenebene winkelverschwenkbar und in unterschiedlichen Positionen mittels geeigneter Feststellmittel einstellbar und feststellbar angeordnet. In nicht dargestellter Weise können auf der Schleuderscheibe 11 zwischen der vorderen Rückwand 115 und der hinteren Rückwand 116 der Wurfachaufeln 112 Ablenkelemente angeordnet sein, welche den durch die Durchtrittsöffnung 128 zu der hinteren Rückwand 116 der Wurfschaufeln durchtretenden Materialstrom derart der hinteren Rückwand 116 zugeleitet wird, dass der von der hinteren Rückwand 116 abgeschleuderte Materialstrom nicht von einer vorderen Rückwand 115 der Wurfschaufeln erfasst wird.

In nicht dargestellter Weise können Mittel zum Verstellen des Aufgabebereiches und/oder Aufgabepunktes des auszubringenden Materiales auf die Schleuderscheiben und/oder der Wurfschaufeln vorgesehen sein. Hierbei können beispielsweise die Ringwand des Aufgaberaumes verdreht werden, so dass das Material zu einem anderen Zeitpunkt oder an einer anderen Stelle den Wurfschaufeln zugeführt wird. Es kann ebenfalls in nicht dargestellter Weise vorgesehen sein, das Mittel zum Verstellen des Aufgabebereiches und/oder Punktes mit den Mitteln zum Verstellen der inneren Abschnitte der Wurfschaufeln über eine elektronische Einstellvorrichtung miteinander in nicht dargestellter Weise verknüpft sind. Hier erfolgt dann in automatischer Weise eine entsprechende Anpassung und Einstellung der Maschine auf die gegebenen Einsatzbedingungen.

## Patentansprüche

1. Schleuderdüngerstreuer mit zumindest zwei rotierend angetriebenen Schleuderscheiben, auf denen Wurfschaufeln angeordnet sind, mit denen sowohl die Normaldüngung mit flach abfallenden Streuflanken als auch das Grenzstreuen mit steil abfallenden Streuflanken durchführbar ist, wobei bei dem Übergang von Normal- auf Grenzstreuen die Wurfschaufeln umstellbar sind, wobei die Rückwände zumindest einiger der Wurfschaufeln zwei einander anschließende Abschnitte aufweisen, wobei der eine Abschnitt gegenüber den anderen Abschnitt verstellbar angeordnet ist, so dass der äußere der Abschnitte nicht mehr an der Schleuderwirkung teilnimmt, **dadurch gekennzeichnet, dass** hinter der vorderen Rückwand (115) der Wurfschaufel (112) eine weitere zumindest eine aufrechte Rückwand (116), die eine kürzere wirksame Länge als die vor ihr angeordnete Rückwand 115 aufweist angeordnet ist, dass dieser weiteren Rückwand (116) der Wurfschaufel (112) durch die durch das Verstellen des inneren Abschnittes (115') der vorderen Rückwand (115) der Wurfschaufel (112) geschaffenen Durchtrittsöffnung (128') das zu verteilende Material zuführbar ist.

2. Schleuderdüngerstreuer nach Anspruch 1, **dadurch gekennzeichnet, dass** das innere Ende der weiteren Rückwand (116) derart zu der vorderen Rückwand (115) der Wurfschaufel angeordnet ist, dass der weiteren Rückwand (116) die durch das Verstellen des inneren Abschnittes (115*"*) der vorderen Rückwand (115) geschaffenen Durchtrittsöffnung (128) Material zugeführt wird.

3. Schleuderdüngerstreuer nach Anspruch 2, **dadurch gekennzeichnet, dass** das innere Ende der weiteren Rückwand (116) der Wurfschaufel (112) an die hinteren Bereiche der vorderen Rückwand (115) der Wurfschaufel (112) anschließt.

4. Schleuderdüngerstreuer nach Anspruch 2 und/oder 3, **dadurch gekennzeichnet, dass** der Zwischenbereich oberhalb der vorderen und hinteren Rückwände der Wurfschaufeln zumindest im inneren Bereich mit einem Abdeckelement abgedeckt iet.

5. Schleuderdüngerstreuer nach Anspruch 1, **dadurch gekennzeichnet, dass** auf jeder Schleuderscheibe zumindest eine Gruppe Murfechaufeln mit kürzerer und eine Gruppe Wurfschaufeln mit längerer wirksamer Länge angeordnet sind, wobei jede Gruppe zumindest zwei in Drehrichtung hintereinander angeordnete Rückwände (116) aufweist.

6. Schleuderdüngerstreuer nach einem oder mehreren der vorstehenden Ansprüche, **dadurch gekennzeichnet, dass** zumindest eine der Schleuderscheiben Mittel zum Verstellen der inneren vorderen Rückwände (115') der Wurfschaufeln (112) aufweist.

7. Schleuderdüngerstreuer nach einem oder mehreren der vorstehenden Ansprüche, **dadurch gekennzeichnet, dass** die Mittel zum verstellen des jeweiligen inneren Teils der vorderen Rückwände der Wurfschaufeln als an den Schleuderscheiben angeordnete motorische Einstellmittel ausgebildet sind.

8. Schleuderdüngerstreuer nach Anspruch 1, **dadurch gekennzeichnet, dass** der innere vordere Abschnitt (115') in einer durch die Rückwand (115) verlaufenden Ebene verstellbar angeordnet ist.

9. Schleuderdüngerstreuer nach Anspruch 14, **dadurch gekennzeichnet, dass** der innere vordere Abschnitt (115') an einem auf der Oberseite der Wurfschaufel (112) sich befindenden Verstellelement (130) befestigt ist und mit diesem gegenüber der Schleuderscheibe (11) und den übrigen Teilen der Wurfschaufel (112) anhebbar und absenkbar ist.

10. Sehleuderdüngeratreuer nach Anspruch 9, **dadurch gekennzeichnet, dass** das Verstellelement (130) als umlaufender Ring (130) ausgebildet ist, dass an diesem Ring sämtliche verstellbaren inneren vorderen Abschnitte (115) der Wurfschaufel angeordnet sind.

11. Schleuderdüngerstreuer, nach Anspruch 10, **dadurch gekennzeichnet, dass** der Ring (130= auf seinem inneren und/oder äußeren Umfang die an ihm befestigten inneren und verstellbaren Abschnitte (115') überragt.

12. Schleuderdüngerstreuer nach Anspruch 9 bis 10, **dadurch gekennzeichnet, dass** an dem Verstellelement (130) zumindest eine Verstelleinrichtung, vorzugsweise eine motorische und/oder fernbedienbare Vorrichtung angreift.

13. Schleuderdüngerstreuer nach Anspruch 1, **dadurch gekennzeichnet, dass** Wurfschaufeln (112) unterschiedlicher wirksamer Länge auf der Schleuderscheibe (11) angeordnet sind.

14. Schleuderdüngerstreuer nach einem oder mehreren der vorgenannten Ansprüche, **dadurch gekennzeichnet, dass** an dem Ring (130) eine gabelähnliche Verstelleinrichtung (133) mit Fernbedienungseinrichtung zum Verstellen der inneren vorderen Abschnitte (115') der Wurfschaufel (112) angreift.

15. Schleuderdüngerstreuer nach einem oder mehreren der vorgenannten Ansprüche, **dadurch gekennzeichnet, dass** die hintere Rückwand (116) der Wurfschaufel (112) derart auf der Schleuderscheibe (11) zu den vorderen Rückwänden (115) der Wurfschaufeln (112) angeordnet und/oder ausgestaltet ist, dass der von der hinteren Rückwand (116) abgeworfene Düngerstrom nicht von einer vorderen Rückwand (115) erfasst wird.

16. Schleuderdüngerstreuer nach einem oder mehreren der vorgenannten Ansprüche, **dadurch gekennzeichnet, dass** zumindest einige der hinteren Rückwände (116) in Scheibenebene winkelverschwenkbar und in unterschiedlichen Positionen ein- und feststellbar angeordnet sind.

17. Schleuderdüngerstreuer nach einem oder mehreren der vorgenannten Ansprüche, **dadurch gekennzeichnet, dass** auf der Schleuderscheibe (11) zwischen der vorderen (115) und der hinteren Rückwand (116) der Wurfschaufel Ablenkelemente angeordnet sind, welche den durch die Durchtrittsöffnungen (128)zu der hinteren Rückwand (116)der Wurfschaufel durchtretenden Materialstrom derart dieser hinteren Rückwand (116) zu leiten, dass der von der hinteren Rückwand (116) abgeschleuderte Materialstrom nicht von einer der vorderen Rückwand (115) der anderen Wurfschaufel (112) erfasst wird.

18. Schleuderstreuer nach einem oder mehreren der vorstehenden Ansprüche, **dadurch gekennzeichnet, dass** Mittel zum Verstellen des Aufgabebereiches und/oder -punktes des auszubringenden Materials auf die Schleuderscheibe und/oder der Wurfschaufeln vorgesehen sind.

19. Schleuderstreuer nach Anspruch 18, **dadurch gekennzeichnet, dass** die Mittel zum Verstellen des Aufgabebereiches und/oder -punktes mit den Mitteln zum Verstellen der inneren Abschnitte der Wurfschaufeln über eine elektronische Einstelleinrichtung miteinander verknüpft sind.
